# EUROPEAN PATENT APPLICATION

(11) **EP 4 435 560 A1**
(43) Date of publication of application: **25.09.2024**
(21) Application number: 22906190.8
(22) Date of filing: 21.11.2022
(51) Int. Cl.: G06F 1/32, H04W 52/02

(54) **COMMUNICATION TRANSMISSION CONTROL METHOD AND APPARATUS, ELECTRONIC DEVICE AND STORAGE MEDIUM**

(30) Priority: 15.12.2021 CN 202111537825
(71) Applicant: ZTE Corporation, Shenzhen, Guangdong 518057 (CN)
(72) Inventor: TIAN, Jun, Shenzhen, Guangdong 518057 (CN)
(74) Representative: Cristinelli, Luca
(86) International application number: PCT/CN2022/133239
(87) International publication number: WO 2023/109438

(57) **Abstract**

Embodiments of the present invention relate to the technical field of communications. Disclosed are a communication transmission controlling method and apparatus, an electronic device, and a storage medium. The method includes: a battery characteristic in a present state of a device is acquired, and a mode of the device is determined according to the battery characteristic; in response to the mode of the device is a power saving working mode, the running time of each stage of communication transmission of the device is adjusted; the communication transmission comprises: an RX stage, a sleep stage and a TX stage, wherein a running time of the sleep stage after adjustment is greater than a running time of the sleep stage before adjustment, and the running time of the TX stage after adjustment is less than the running time of the sleep stage before adjustment. The present invention avoids the problem that a device may suffer a transient overload, thereby causing the device to collapse, and improves the stability of the device.

## Description

### Cross-Reference to Related Application

This invention is based on and claims priority from Chinese patent application CN 202111537825.3, filed on 15 December 2021, entitled "Communication transmission control method and apparatus, electronic device and storage medium", the invention of which is incorporated herein by reference in its entirety.

### Technical Field

The present invention relates to the field of communications technologies, and in particular, to a communication transmission control method and apparatus, an electronic device, and a storage medium.

### Background

A small-capacity battery device has the characteristics of being portable and small. Taking a Tracker-type product as an example, the Tracker-type product belongs to a portable positioning product carried by itself, has a small volume and a limited battery capacity, and how to improve the stability of the Tracker-type product is always a research direction in the art. In particular, in the case where the battery is low, when a large power consumption load occurs suddenly in the battery.

The Tracker device is generally used for positioning notification, has the basic capability of wireless communication, and the portability thereof determines that the volume thereof is small and the battery capacity is also small. When a load of a device changes, the device may experience a risk of a voltage drop, and a device with a small battery capacity (a battery with a small capacity usually has a limited peak current capability), whose load change makes it easier for the device to have a voltage fluctuation behavior; when the load of the battery changes (for example, when the device is sending or receiving communications), the voltage of the battery will exhibit a voltage drop behavior as the load current increases. When the voltage is reduced due to the load of the battery, the performance of the device or the stability of some devices in the device may be affected. Therefore, there is a problem in existing devices that a battery is subjected to a transient overload, resulting in the device collapses and poor stability of the device.

### Summary

The purpose of the present invention is to solve the described problems. Provided are a communication transmission control method and apparatus, an electronic device and a storage medium, which avoid the problem that a device collapses due to the fact that the device is subjected to a transient overload, thereby improving the stability of the device.

In order to solve the described problem, an embodiment of the present invention provides a communication transmission control method. The method includes: a battery characteristic in a present state of a device is acquired, and a mode of the device is determined according to the battery characteristic; when the mode of the device is a power saving working mode, the running time of each stage of communication transmission of the device is adjusted; the communication transmission comprises: an receive (RX) stage, a sleep stage and a transmit (TX) stage, wherein a running time of the sleep stage after adjustment is greater than a running time of the sleep stage before adjustment, and the running time of the TX stage after adjustment is less than the running time of the sleep stage before adjustment.

In order to solve the described problem, an embodiment of the present invention provides an apparatus. The apparatus includes: a mode determination module, configured to acquire a battery characteristic in a present state of a device, and determine a mode of the device according to the battery characteristic; an adjustment module, configured to adjust a running time of each stage of communication transmission of the device when the mode of the device is a power saving working mode; the communication transmission comprises: an RX stage, a sleep stage and a TX stage, wherein a running time of the sleep stage after adjustment is greater than a running time of the sleep stage before adjustment, and the running time of the TX stage after adjustment is less than the running time of the sleep stage before adjustment.

In order to solve the described problem, the embodiments of the present invention also provide an electronic device. The device includes: at least one processor; and a memory communicatively coupled to the at least one processor; the memory stores an instruction that can be executed by the at least one processor, where the instruction is executed by the at least one processor, so that the at least one processor can execute the communication transmission controlling method.

In order to solve the described problem, the embodiments of the present invention also provide a computer readable storage medium, which stores a computer program, wherein the computer program, is configured to cause, when executed by a processor, the processor to perform the method for controlling the communication transmission controlling method.

### Brief Description of the Drawings

One or more embodiments are illustrated by way of example in the figures of the accompanying drawings, which do not constitute a limitation on the embodiments, and elements in the figures having the same reference numerals are designated as like elements, and the figures of the drawings are not to scale unless otherwise specified.
Figure 1 is a general schematic diagram of a function providing module according to an embodiment of the present invention;
Figure 2 is a flowchart of a communication transmission control method according to an embodiment of the present invention;
Figure 3 is a flowchart of mode identification of a device according to an embodiment of the present invention;
Figure 4 is a schematic structural diagram of a communication transmission control apparatus according to an embodiment of the present invention;
Figure 5 is a schematic structural diagram of an electronic device according to an embodiment of the present invention.

### Detailed Description of the Embodiments

In order to make the objects, the technical solutions and the advantages of the embodiments of the present invention more apparent, the embodiments of the present invention will be described in detail below with reference to the drawings. However, a person of ordinary skill in the art may understand that, in the embodiments of the present invention, many technical details are put forward to help a reader understand the present invention better. But even without these technical details and based on various changes and modifications of the following embodiments, the claimed technical solutions of the present invention can be implemented.

Embodiments of the present invention relate to a method. The method comprises: a battery characteristic in a present state of a device is acquired, and a mode of the device is determined according to the battery characteristic; in response to the mode of the device is a power saving working mode, the running time of each stage of communication transmission of the device is adjusted; the communication transmission comprises: an RX stage, a sleep stage and a TX stage, wherein a running time of the sleep stage after adjustment is greater than a running time of the sleep stage before adjustment, and the running time of the TX stage after adjustment is less than the running time of the sleep stage before adjustment. Thus, the problem that the device collapses due to the fact that the battery is subjected to a momentary excessive load is avoided, and the stability of the device is improved.

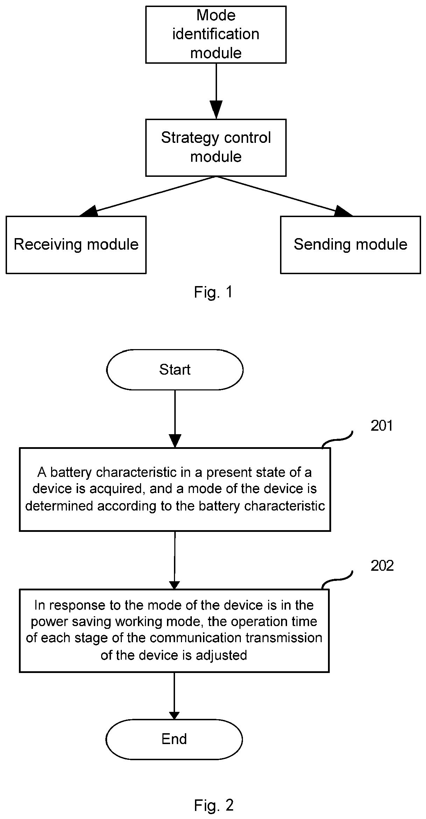

Figure 1 is a general schematic diagram of an embodiment of the present invention, comprising: a mode identification module, a strategy control module, a receiving module and a sending module, wherein the mode identification module is configured to determine an working mode of a device according to a present battery state; the policy control module is configured to determine whether to intervene the operations of the receiving module and the sending module according to the judging result of the mode identifying module. The receiving module and the transmitting module are two basic working modules in wireless communication.

The implementation details of the method in this embodiment are described in detail in the following. The following content is only for ease of understanding the implementation details of this solution, and is not a requirement for implementing this solution. As shown in figure 2, the specific process includes the following steps:
In step 201, a battery characteristic in a present state of a device is acquired, and a mode of the device is determined according to the battery characteristic.

In an example, a terminal acquires a battery characteristic in a present state by monitoring a state of a battery, where the battery characteristic at least includes one or any combination of the following: a present voltage of the battery, a present current of the battery, a remaining electric quantity of the battery, a battery temperature, wherein the present voltage of the battery, a present discharging current, the remaining electric quantity of the battery, and the battery temperature, which are all current real-time data acquired from the battery.

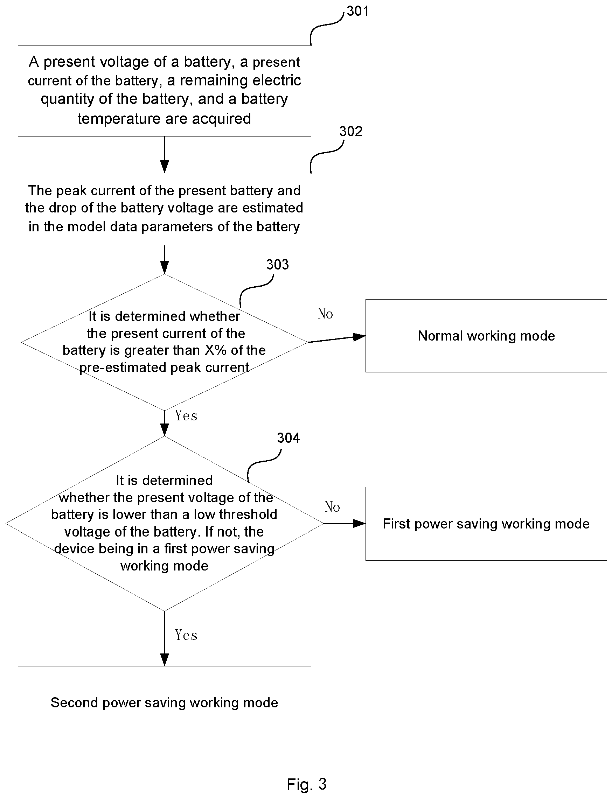

In an example, a process of identifying a mode of a device is shown in figure 3, and the specific process is as follows:
In step 301, a present voltage of a battery, a present discharging current, a remaining electric quantity of the battery, and a battery temperature are acquired.
In step 302, the peak current of the present battery and the drop of the battery voltage are estimated in the model data parameters of the battery.

In an example, model data of the battery is data pre-stored in a device, wherein the model data is data tested by the battery under different temperatures and different load currents, and the device can predict, according to the model data, maximum peak current output capabilities of the battery under different voltages, different capacities, and different temperatures.

In step 303, it is determined whether the present discharging current of the battery is greater than X% of the pre-estimated peak current. If not, the device is in a normal working mode; if yes, perform step 304.

In an example, if the pre-estimated peak current of the battery is 200 mA and X is 80, then X% of the pre-estimated peak current is 160 mA. When the current is 180 mA, it can be obtained that the current is greater than X% of the pre-estimated peak current, which indicates that the load of the present device is not within the capability output range of the device, and it is determined that the device is in the power saving working mode; when the current is 140 mA, it can be obtained that the current is less than X% of the pre-estimated peak current, which indicates that the load of the present device is within the capability output range of the device, and then it is determined that the working mode of the present device is the normal working mode.

In a normal working mode, the receiving module and the sending module both work independently; during normal working of a device, the receiving module can receive communication contents at any time; a sending module also sends out the required contents at any time; and the control strategy module does not implement any access strategy on the receiving module and the sending module of the device.

In addition, the configuration of X may be determined in combination with specific conditions of a device, that is, X may be configured according to factors such as a current required when all functions of the device work, a current required when a main function works, and a current required when a minimal core function works. For example, if the current pre-estimated peak current is 200 mA, because the electric quantity at this time is relatively sufficient (for example, above 20%), X may be configured to be between 90-100, so as to enable the device to operate in the normal working mode as much as possible.

In one example, the current pre-estimated peak current is 200 mA, since there is less electric quantity at this time (such as between 5%-20% of electric quantity), however, the current required by the main function of the device is about 120 mA, and then it is suggested to configure X to be between 60-90. Not only the discharging current of the battery can be controlled in advance to not exceed X% of the pre-estimated peak current, in addition, but also normal running of a core function of the device can be ensured, and further, it is ensured that the battery will not turned off due to the instantaneous decrease of the battery voltage caused by large discharging current.

In one example, the current pre-estimated peak current is 200 mA, since there is little electric quantity (e.g., below 5 percent) at this time, however, the current required by the minimal core function of the device is about 80 mA, and it is recommended to configure X to be between 40-60. Not only the discharging current of the battery can be controlled in advance to not exceed X% of the pre-estimated peak current, but also the operation of the minimal core function of the device can be ensured, furthermore, it can be ensured that the battery will not collapse instantly to turn off due to excessive load.

In one example, in response to the present current of the battery is greater than X% of the pre-estimated peak current, it means that the current equipment load situation may exceed the overall load capacity of the battery.

In step 304, it is determined whether the present voltage of the battery is lower than a low threshold voltage of the battery. If not, the device being in a first power saving working mode; if so, the device is in a second power saving working mode.

In an example, in response to it is determined that the current discharging current is greater than X% of the pre-estimated peak current, whether the present voltage of the battery is lower than a low threshold voltage of the battery is continuously determined, and if the voltage of the present battery is greater than the low threshold voltage of the battery, it means that the device only has a risk of overload currently, and then it is determined that the working mode of the device is the first power saving working mode.

In an example, if the voltage of the present battery is lower than a low threshold voltage of the battery, the battery may have a risk of low-power off, and in this case, it is determined that the working mode of the device is the second power saving working mode.

Further, the described steps can be executed independently or in combination. In addition, the first power saving working mode and the second power saving working mode are only two power saving working modes in the embodiments of the present invention. Any extension on this basis also belongs to an extension of the present invention, the power saving working mode is only a mode name word definition in the present invention, and does not conflict with any existing name, nor are they covered by currently similar names.

In step 202, in response to the mode of the device is in the power saving working mode, the operation time of each stage of the communication transmission of the device is adjusted.

The communication transmission comprises an RX stage, a sleep stage and a TX stage, wherein the operation time of the sleep stage after adjustment is greater than the operation time of the sleep stage before adjustment, and the operation time of the TX stage after adjustment is less than the operation time of the sleep stage before adjustment. The RX stage represents a working stage of the device receiving module, and the TX stage represents a working stage of the device sending module.

In an example, a terminal control a communication transmission of device, and divides a certain transmission into different control sections during the communication transmission, and then completes the certain communication transmission by controlling a combination of a duration t1 of an RX stage, a duration t2 of a sleep stage, and a duration t3 of a TX stage. Wherein t1, t2 and t3 change in different combinations according to different working modes.

In one example, the control policy is determined based on the determination result of the mode identification, and if the determination result is in a power saving working mode (whether in the first power saving working mode or in the second power saving working mode), a control strategy module controls a receiving module and a sending module, and reduces the load of a device by controlling the receiving module and the sending module, thus, it is ensured that the output of the battery is within a normal output capability range, and the risk of battery collapse is avoided.

In one example, where the device is in a first power saving working mode or a second power saving working mode, a policy control module controls communication transmission of a tracker, and divides the communication transmission into three stages, RX, sleep and TX, completes communication transmission by controlling the combination of a working time t1 (namely, the duration of an RX stage) of a receiving module, a duration t2 of a sleep stage and the working time t3 (namely, the duration of a TX stage) of a sending module, wherein t1, t2 and t3 change in different combinations according to different working modes.

In one example, the degree of sleep in the sleep stage can be divided into deep sleep, light sleep and microsleep, wherein the functional modules of the device operating under deep sleep are less than the functional modules operating under light sleep; the number of functional modules of a device operating under light sleep is less than that of functional modules operating under light sleep. For example, in the case of deep sleep, the device may disable most of the functional modules ; in the case of light sleep, the device may disable a small portion of functional modules; in the case of micro-sleep, only the receiving module and the sending module do not operate, and other modules operate normally.

In addition, the power consumption of the device in the second power saving working mode is less than that in the first power saving working mode. Therefore, in response to the device is in the first power saving working mode, the time length of the RX stage of the first power saving working mode is longer than the time length of the RX stage of the second power saving working mode, the time length of the sleep stage of the first power saving working mode is shorter than the time length of the sleep stage of the second power saving working mode, and the time length of the TX stage of the first power saving working mode is longer than the time length of the RX stage of the second power saving working mode.

In an example, in response to the device is in the first power saving working mode, the time length of the RX stage of the first power saving working mode may also be less than the time length of the RX stage of the second power saving working mode, the time length of the sleep stage of the first power saving working mode is less than the time length of the sleep stage of the second power saving working mode, and the time length of the TX stage of the first power saving working mode is greater than the time length of the RX stage of the second power saving working mode.

Further, in different power saving working modes, the times of t1, t2 and t3 are different; generally, with the decrease of the electric quantity, it is necessary to prolong the time t2 of the sleep stage; in addition, since the TX stage tends to be at a relatively high power consumption, the time period of t3 is shortened as much as possible.

In an example, in a normal working condition, the receiving module and the sending module both work independently and are not controlled by the policy control module; during normal working of a device, the receiving module receives communication content in real time; the sending module sends content to be sent in real time; and the policy control module does not perform any intervention on the receiving module and the sending module in a normal working mode.

Still further, since the mode identifying module updates different power saving working modes in real time, the configuration of t1, t2 and t3 in transmission 1 and the configuration of t1, t2 and t3 in next transmission 2 are usually different during multiple transmissions. Thus, there may be multiple possible combinations of different combinations of control policies throughout the overall transmission.

In addition, if only data needs to be sent and data does not need to be received in a certain transmission, the power saving working mode may also be simplified as only keeping the sleep stage and the TX stage.

According to the communication transmission controlling method provided in the embodiment of the present invention, by acquiring the present battery characteristic of a device, and pre-estimating the potential risk of the battery in advance according to the battery characteristic so as to determine the working mode of the present device, and a strategy matching the working mode is adopted to solve the potential risk that the battery may face in advance, i.e. in response to the device is in a power saving working mode, the overall power consumption of the device is reduced by adjusting the RX stage, sleep stage and TX stage of the communication transmission of the device, the load of the battery is reduced, and the problem that a device collapses due to the fact that the battery is subjected to a instantaneously excessive load is avoided, the risk that the battery may face is eliminated, and the stability of the device is improved.

The step division of the above various methods is only for the purpose of clear description, and during implementation, the methods may be combined into one step or some steps may be divided into a plurality of steps, and all the steps are within the scope of protection of the present patent as long as they include the same logic relationship; it is within the scope of protection of the patent to add insignificant modifications to or introduce insignificant designs into the algorithms or flows, but not to change the core design of the algorithms and flows.

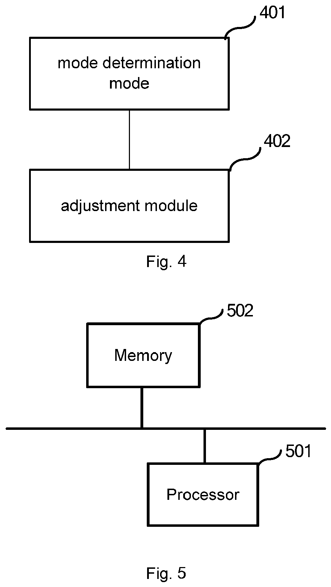

Embodiments of the present invention further relate to a communication transmission controlling apparatus. As shown in figure 4, the communication transmission controlling apparatus includes a mode determining module 401 and an adjusting module 402.

Specifically, the mode determination module 401, is configured to acquire a battery characteristic in a present state of a device, and determine a mode of the device according to the battery characteristic; an adjustment module 402,is configured to adjust running time of each stage of communication transmission of the device in response to the mode of the device is a power saving working mode; the communication transmission comprises an RX stage, a sleep stage and a TX stage, wherein the operation time of the sleep stage after adjustment is greater than the operation time of the sleep stage before adjustment, and the operation time of the TX stage after adjustment is less than the operation time of the sleep stage before adjustment.

In an example, the mode determination module 401 is configured to acquire a battery characteristic in a present state by monitoring a state of a battery, where the battery characteristic at least includes one or any combination of a present voltage of the battery, a present current of the battery, a remaining electric quantity of the battery, a battery temperature, wherein a present voltage of the battery, a present discharging current, a remaining electric quantity of the battery, and a battery temperature, which are all current real-time data acquired from the battery.

In an example, in response to the present discharging current of the battery is less than X% (where X is any value between 1-100) of the pre-estimated peak current, it means that the load of the present device is within the capability output range of the device, and it is determined that the working mode of the present device is the normal working mode. In this case, the control policy module does not implement any access policy on the receiving module and the sending module of the device.

In addition, the configuration of X may be determined in combination with specific conditions of a device, that is, X may be configured according to factors such as a current required when all functions of the device work, a current required when a main function works, and a current required when a minimal core function works. For example, if the present pre-estimated peak current is 200 mA, because the electric quantity at this time is relatively sufficient (for example, above 20%), X may be configured to be between 90-100, so as to enable the device to operate in the normal working mode as much as possible.

In an example, when the determination module 401 is configured to determine that the present discharging current is greater than X% of the pre-estimated peak current, the determination module 401 is configured to continue to determine whether the present voltage of the battery is lower than a low threshold voltage of the battery. If the voltage of the present battery is greater than the low threshold voltage of the battery, it means that the device only risks being overloaded currently, and then the working mode of the device is determined as the first power saving working mode.

In an example, if the voltage of the present battery is lower than a low threshold voltage of the battery, the battery may have a risk of low-power off, and in this case, it is determined that the working mode of the device is the second power saving working mode.

In an example, the adjustment module 402 is configured to control communication transmission of a device, and during the communication transmission, divide a certain transmission into different control sections, and then complete a certain communication transmission by controlling a combination of a duration t1 of an RX stage, a duration t2 of a sleep stage, and a duration t3 of a TX stage. Wherein t1, t2 and t3 change in different combinations according to different working modes.

In one example, the degree of sleep in the sleep stage can be divided into: deep sleep, light sleep and microsleep, wherein the functional modules of the device operating under deep sleep are less than the functional modules operating under light sleep; the number of functional modules of a device operating under light sleep is less than that of functional modules operating under light sleep. For example, in the case of deep sleep, the device may disable most of the functional modules; in the case of light sleep, the device may disable a small portion of functional modules; in the case of micro-sleep, only the receiving module and the sending module do not operate, and other modules operate normally.

In addition, the power consumption of the device in the second power saving working mode is less than that in the first power saving working mode. Therefore, when the device is in the first power saving working mode, the time length of the RX stage of the first power saving working mode is longer than the time length of the RX stage of the second power saving working mode, the time length of the sleep stage of the first power saving working mode is shorter than the time length of the sleep stage of the second power saving working mode, and the time length of the TX stage of the first power saving working mode is longer than the time length of the RX stage of the second power saving working mode.

In an example, when the device is in the first power saving working mode, the time length of the RX stage of the first power saving working mode may also be less than the time length of the RX stage of the second power saving working mode, the time length of the sleep stage of the first power saving working mode is less than the time length of the sleep stage of the second power saving working mode, and the time length of the TX stage of the first power saving working mode is greater than the time length of the RX stage of the second power saving working mode.

According to the communication transmission controlling apparatus provided in the embodiment of the present invention, by acquiring the present battery characteristic of a device, and pre-estimating the potential risk of the battery in advance according to the battery characteristic so as to determine the working mode of the present device, and a strategy matching the working mode is adopted to solve the potential risk that the battery may face in advance, i.e. when the device is in a power saving working mode, the overall power consumption of the device is reduced by adjusting the RX stage, sleep stage and TX stage of the communication transmission of the device, the load of a battery is reduced, and the problem that a device collapses due to the fact that the battery is subjected to a instantaneously excessive load is avoided, the risk that the battery may face is eliminated, and the stability of the device is improved.

It is not difficult to find that this implementation is a device implementation corresponding to the foregoing embodiment of the communication transmission controlling method, and this implementation may be implemented in cooperation with the foregoing embodiment of the communication transmission controlling method. Related technical details mentioned in the foregoing embodiment of the communication transmission controlling method are still valid in this embodiment, and are not described herein again to reduce repetition. Correspondingly, the related technical details mentioned in this embodiment may also be applied in the embodiment of the communication transmission controlling method.

It is worth mentioning that each module involved in the described embodiments of the present invention is a logic module. In practical applications, one logic unit may be one physical unit, may also be a part of one physical unit, and may also be implemented by a combination of a plurality of physical units. In addition, in order to highlight the innovative section of the present invention, the present embodiment does not introduce a unit less closely related to solving the technical problem proposed by the present invention, but this does not indicate that other units are not present in the present embodiment.

An embodiment of the present invention further provides an electronic device. As shown in figure 5, the electronic device includes at least one processor 501; and a memory 502 communicatively connected to the at least one processor 501; the memory 502 stores an instruction that can be executed by the at least one processor 501, where the instruction is executed by the at least one processor 501, so that the at least one processor can execute the foregoing communication transmission control method.

The memory and the processor are connected in a bus manner, the bus may include any number of interconnected buses and bridges, and the bus connects various circuits of the one or more processors and the memory together. The bus may also connect a variety of other circuits, such as peripheral devices, voltage regulators, and power management circuitry, which are well known in the art and therefore are not described further herein. The bus interface provides an interface between the bus and the transceiver. The transceiver may be one element or multiple elements, such as multiple receivers and transmitters, that provide a means for communicating with various other devices over a transmission medium. Data processed by a processor is transmitted on a wireless medium through an antenna, and further, the antenna receives the data and transmits the data to the processor.

The processor is responsible for managing a bus and general processing, and can further provide various functions, including timing, peripheral interfaces, voltage regulation, power management, and other control functions. And the memory may be used to store data used by the processor in performing operations.

The abovementioned product can execute the method provided in the embodiments of the present invention, and has corresponding functional modules and beneficial effects for executing the method. For details of the technology not described in the embodiments, reference can be made to the method provided in the embodiments of the present invention.

An embodiment of the present invention further provides a computer readable storage medium, which stores a computer program. The computer program implements the foregoing method embodiments when being executed by a processor.

Persons skilled in the art may understand that all or a part of the steps of the method according to the embodiments of the present invention may be implemented by a program instructing relevant hardware. The program is stored in a storage medium, and includes several instructions for instructing a device (which may be a single chip, a chip, or the like) or a processor to execute all or a part of the steps of the method according to the embodiments of the present invention. The foregoing storage medium includes: any medium that can store program code, such as a USB flash disk, a removable hard disk, a Read-Only Memory (ROM), a Random Access Memory (RAM), a magnetic disk, or an optical disk.

The abovementioned embodiments are provided to realize and use the present invention by a person of ordinary skill in the art, and a person of ordinary skill in the art can make various modifications or changes to the described embodiments without departing from the inventive concept of the present invention, and accordingly the scope of protection of the present invention is not limited by the described embodiments, and should comply with the maximum scope of the innovative features mentioned in the claims.

## Claims

1. A method for controlling communication transmission, comprising:
acquiring a battery characteristic in a present state of a device, and determining a mode of the device according to the battery characteristic;
adjusting a running time of each stage of communication transmission of the device in response to the mode of the device is a power saving working mode; the communication transmission comprises: an receive, RX, stage, a sleep stage and a transmit, TX, stage, wherein a running time of the sleep stage after adjustment is greater than a running time of the sleep stage before adjustment, and the running time of the TX stage after adjustment is less than the running time of the sleep stage before adjustment.

2. The method for controlling communication transmission according to claim 1, wherein the battery characteristic comprise one or any combination of the following:
a present voltage of a battery, a present current of the battery, a remaining electric quantity of the battery, and a battery temperature.

3. The method for controlling communication transmission according to claim 2, wherein when the battery characteristic comprise: the present current of the battery; the determining a mode of the device according to the battery characteristic comprises:
pre-estimating a peak current and voltage drop condition of the battery via pre-stored battery model data; wherein the battery model data is obtained by testing a battery under different temperatures and/or different load currents;
determining that the mode of the device is the power saving working mode in response to the present current of the battery is greater than X% of an pre-estimated peak current; where X is any number from 1 to 100.

4. The method for controlling communication transmission according to claim 3, wherein when the battery characteristic comprise: the present voltage of the battery; the power saving working mode comprises a first power saving working mode and a second power saving working mode; wherein the power consumption of the device in the second power saving working mode is less than the power consumption in the first power saving working mode;
determining that the mode of the device is the power saving working mode in response to the present current of the battery is greater than X% of the pre-estimated peak current comprises:
determining that the mode of the device is the first power saving working mode in response to the present current of the battery is greater than X% of the pre-estimated peak current and the present voltage of the battery is higher than or equal to a low electrical threshold voltage of the battery;
and determining that the mode of the device is the second power saving working mode in response to the present current of the battery is greater than X% of the pre-estimated peak current and the present voltage of the battery is less than a low electrical threshold voltage preset for the battery.

5. The method for controlling communication transmission according to claim 3 or 4, the X is determined according to one of the following factors or any combination thereof: a current required when all functions of the device work, a current required when main functions of the device work, and a current required when minimal core functions of the device work.

6. The method for controlling communication transmission according to claim 2, wherein when the battery characteristic include: the present voltage of the battery; the determining a mode of the device according to the battery characteristic comprises:
determining that the mode of the device is the second power saving working mode when the present voltage of the battery is lower than a low electrical threshold voltage preset for the battery.

7. The method for controlling communication transmission according to claim 1, wherein the method further comprises:
after the battery characteristic in the present state of the device are acquired, determining a sleep degree of the device according to the battery characteristic;
wherein the sleep degree comprises deep sleep, light sleep and microsleep;
the functional module of the device operating in the deep sleep is less than the functional module operating in the light sleep;
the functional modules of the device operating in the light sleep are less functional modules operating in the light sleep than functional modules operating in the micro sleep.

8. An apparatus for controlling communication transmission, comprising:
a mode determination module, configured to acquire battery characteristic in a present state of a device, and determine a mode of the device according to the battery characteristic;
an adjustment module, configured to adjust a running time of each stage of communication transmission of the device when the mode of the device is a power saving working mode; the communication transmission comprises: an receive, RX, stage, a sleep stage and a transmit, TX stage, wherein a running time of the sleep stage after adjustment is greater than a running time of the sleep stage before adjustment, and the running time of the TX stage after adjustment is less than the running time of the sleep stage before adjustment.

9. An electronic device, comprising:
at least one processor; and ,
a memory communicatively coupled to the at least one processor; wherein,
the memory stores an instruction executable by the at least one processor, wherein the instruction is executed by the at least one processor, so that the at least one processor can execute the method for controlling communication transmission as claimed in any one of claims 1 to 7.

10. A computer readable storage medium, which stores a computer program, wherein the computer program is configured to cause, when executed by a processor, the processor to perform the method for controlling communication transmission as claimed in any one of claims 1 to 7.
